# EUROPÄISCHE PATENTANMELDUNG

(11) **EP 4 570 343 A1**
(43) Veröffentlichungstag der Anmeldung: **18.06.2025**
(21) Anmeldenummer: 23217024.1
(22) Anmeldetag: 15.12.2023
(51) Int. Cl.: B01D 29/15, B01D 29/23, B01D 29/56, B01D 29/88, B01D 36/00

(54) **FILTERELEMENT UND FILTERMODUL HIERMIT**

(71) Anmelder: FAUDI Aviation GmbH, 35260 Stadtallendorf (DE)
(72) Erfinder: LAUBER, Uwe, 35440 Linden/Leihgestern (DE); SCHLEPPHORST, Volker, 55595 Braunweiler (DE)
(74) Vertreter: Patentanwälte Olbricht Buchhold Keulertz

(57) **Zusammenfassung**

Die Erfindung betrifft ein Filterelement (1) mit einer Filterröhre (10), die einen Hohlraum (11) und ein erstes und ein zweites Ende (12, 13) aufweist, wobei am ersten Ende (12) der Filterröhre (10) ein Zugang (20) in den Hohlraum (11) mit einem Zugangskanal (21) ausgebildet ist. Dabei ist vorgesehen, dass der Zugangskanal (21) als Venturi-Rohr (22) mit einer Querschnittsverengung (23) ausgebildet ist.

## Beschreibung

Die Erfindung betrifft ein Filterelement gemäß dem Oberbegriff von Anspruch 1 und ein Filtermodul hiermit nach Anspruch 15.

Filterelemente und Filtermodule hiermit dienen dem Abtrennen von festen oder flüssigen Bestandteilen aus einem Filtermedium. Zur Abscheidung von einer ersten Flüssigkeit aus einer zweiten Flüssigkeit kommen bspw. als Coalescer und/oder Separator ausgebildete Filterelemente zum Einsatz. Beispielsweise sind Filterelemente bekannt, die als Wasser-Kraftstoff-Abscheider ausgebildet sind, um Wasser aus Kraftstoff abzusondern oder umgekehrt.

Coalescer-Elemente (auch als Koaleszenzelement bezeichenbar) werden bspw. in der ersten Stufe in einem Filter-/Wasserabscheider (ein Filtermodul) eingesetzt, wenn Kraftstoff in einen Behälter eintritt. Die Durchströmung des Coalescer-Elements erfolgt von innen nach außen. Hierzu weisen sie eine Filterröhre aus einem Material auf, das für das abzuscheidende Medium schwerer durchdringbar ist als für das zu reinigende Medium. Auf diese Weise bilden sich innerhalb der Filterröhre oder an deren Oberfläche größer werdende Tropfen des abzuscheidenden Mediums, die aufgrund ihrer Größe und einem Dichteunterschied zum zu reinigenden Medium absinken oder aufsteigen und in einem vorgesehenen Sammelraum sammelbar sind. Dieser Sammelraum kann dann entleert werden.

Separator-Elemente werden bspw. als effektive Wasserbarriere als zweite Stufe in Filter-/Wasserabscheidern eingesetzt. Nach dem Austritt aus dem Coalescer-Element kann der beispielhafte Kraftstoff die Oberfläche des Separator-Elements passieren, während Wassertröpfchen von der hydrophoben Abscheideoberfläche abgewiesen werden und an der Außenfläche des Separator-Elementes ablaufen. Auch dieses abgeschiedene Wasser gelangt dann in den Sammelraum.

In DE 19 05 190 A ist beispielsweise eine Filtervorrichtung bzw. ein Filtermodul beschrieben, bei der rohrförmige erste und zweite Filterelemente in einem Filterbehälter parallel zueinander angeordnet sind. Der Zulauf erfolgt durch die ersten Filterelemente in den Filterbehälter hinein und der Ablauf über die zweiten Filterelemente aus dem Behälter hinaus. Das zweite Filterelement ist als Separator zur Wasserabscheidung beschrieben. Möglich ist dabei die Ausbildung des ersten Filterelements als Coalescer-Element.

Aus DE 38 18 595 A1 ist bekannt, dass sich eine Filterröhre für ein Coalescer-Element dadurch herstellen lässt, dass ein gelochtes Stützrohr bzw. gelochter Stützkörper einen Wickelkern für Glasfasermatten unterschiedlicher Porosität bzw. glasfaserverstärkte Polyamidmatten ausbildet, sodass das Stützrohr und die mehrlagig auf das Stützrohr aufgewickelten Matten die Filterröhre ausbilden. Das Stützrohr wird dann an seinen Enden mit einer ersten Endscheibe, die einen Zugang ausbildet und einer abdichtenden zweiten Endscheibe verschlossen. Eingesetzt wird das Coalescer-Element nunmehr dazu, freies Wasser aufweisenden Kohlenwasserstoff durch den Zugang in das Stützrohr einzuleiten und von innen nach außen durch die Filterröhre zu befördern. Ein ähnliches Umwickeln eines Stützkerns mit einem mattenförmigen Glasfasermaterial zur Ausbildung eines Filterelements bzw. Koaleszenzabscheiders/Coalescer-Elements wird auch in DE 21 26 080 C3 und DE 11 13 783 B beschrieben.

Der Aufbau eines Separator-Elements kann äquivalent erfolgen, wobei jedoch die Filtermaterialien der Filterröhre anders auszuwählen sind, um die Wasserabscheidung bereits auf der Eintrittsseite oder direkt an der Eintrittsoberfläche zu erzielen.

Nachteilhaft an diesen Ausgestaltungen ist, dass der Druck über der Länge der Filterröhre abfällt, sodass die Durchtrittsmenge des Fluids durch die Filterröhre mit zunehmendem Abstand vom Zugang absinkt. Je schlanker und länger die Filterröhre ist, desto ausgeprägter wird das Problem, zumal dann auch die Querschnittsfläche des stirnseitig in der Endscheibe ausgebildeten Zugangs klein ist. Bei Feststofffiltern ist zu beobachten, dass die Filterelemente im Bereich der Eintrittsöffnung schneller verschmutzen als weiter weg. Für ein gutes Filterergebnis über der Nutzungsdauer ist jedoch ein gleichmäßiges Verschmutzen zu bevorzugen. Bei nach dem Koaleszenzprinzip arbeitenden Filterelementen (Coalescer-Elementen) darf die Durchtrittsmenge durch die Filterröhre im Bereich des Zugangs nicht so hoch sein, dass Tropfen des abgeschiedenen Mediums statt abzulaufen wieder vom Hauptmedium aufgespalten und mitgerissen werden. Das gesamte Filterelement muss dann mit der im Bereich des Zugangs vorliegenden Begrenzung der Durchtrittsgeschwindigkeit betrieben werden. Beabstandet von dem Zugang wird die Filterröhre dann mit einer Geschwindigkeit durchströmt, die kleiner ist als es für das Abscheiden tatsächlich möglich wäre. Bei Separator-Elementen ist der der Effekt in umgekehrter Strömungsrichtung zu beobachten. Im Bereich des Zugangs tritt mehr erstes Fluid durch die Filterröhre und es muss entsprechend auch eine größere Menge des zweiten Fluids pro Zeit zurückgehalten werden als beabstandet vom Zugang.

Ein weiterer Nachteil ist, dass die Filterelemente, Separator-Elemente oder Coalescer-Elemente austauschbare Teile sind und im Filterbehälter in Aufnahmeöffnungen eingesetzt werden. Dort sitzt wenigstens eine Dichtung in einem Dichtspalt. Hier kann es aufgrund von fehlender Strömung zu einer Mikrobenbildung kommen. Das ist auf der reinseitigen Seite des Filterelements besonders kritisch, weil die Mikroben mit dem gereinigten Fluid aus der Filtervorrichtung bzw. dem Filtermodul ausgetragen werden können, oftmals in Form von kleinen Verklumpungen. Aber auch beim Wechsel der Filterelemente können sich die Mikroben und Verklumpungen lösen. Sie fallen dann bspw. in den Filterbehälter und verunreinigen bspw. direkt bei Wiederinbetriebnahme die neuen Filterelemente. Mikroben, die in einer Aufnahme eines Filterelements, insbesondere auch Separator-Elements, verbleiben, können beim Einsetzen des neuen Filterelements in den reinseitigen Ablauf des Filtermoduls geschoben werden. Die Mikroben können sich dann an anderer Stelle wieder festsetzen und die kleinen Verklumpungen beispielsweise Kraftstofffilter vor einem Antrieb zusetzen.

Aufgabe der Erfindung ist es daher, die Nachteile des Standes der Technik zu überwinden und eine Lösung bereitzustellen, die zu einem kostengünstigen, einfach herstellbaren und umweltfreundlichen Filterelement, insbesondere auch Separator-Element und/oder Coalescer-Element, führt, wobei auch eine leichte Wartung und Entsorgung gewünscht ist.

Hauptmerkmale der Erfindung sind im kennzeichnenden Teil von Anspruch 1 und in Anspruch 15 angegeben. Ausgestaltungen sind Gegenstand der Ansprüche 2 bis 14 und der Beschreibung.

Die Erfindung betrifft ein Filterelement mit einer Filterröhre, die einen Hohlraum und ein erstes und ein zweites Ende aufweist, wobei am ersten Ende der Filterröhre ein Zugang in den Hohlraum mit einem Zugangskanal ausgebildet ist. Dabei ist vorzugsweise vorgesehen, dass der Zugangskanal als Venturi-Rohr mit einer Querschnittsverengung ausgebildet ist.

Vorteilhaft hieran ist, dass man gegenüber einem rein zylindrischen Zugangskanal einen geringeren Druckabfall über dem Zugangskanal erzielen kann. Damit kann auch bei dünnen Durchmessern der Filterröhre ein hoher Durchfluss erzielt werden. Insbesondere kann der Durchmesser des Zugangskanals am freien Ende größer sein als der Innendurchmesser des Hohlraums. Zudem werden im Zentrum der Querschnittsverengung größere Strömungsgeschwindigkeiten erzielt als weiter außen, sodass die Druckdifferenz über der Länge der Filterröhre geringer ausfällt.

Gemäß einer näheren Ausgestaltung ist vorgesehen, dass die Querschnittsverengung eine konusförmige Verjüngung in Richtung des Hohlraums aufweist; und/oder die Querschnittsverengung eine konusförmige Aufweitung in Richtung des Hohlraums aufweist, insbesondere auf der zum Hohlraum weisenden Seite der konusförmige Verjüngung. Durch diese Konusse lässt sich die Querschnittsverjüngung des Venturi-Rohrs auf einfache Weise ausbilden.

Im Speziellen kann die konusförmige Verjüngung einen Winkel von 4 bis 15 Grad, vorzugsweise 6 bis 11 und besonders bevorzugt von 7 bis 9 Grad zur Konusachse aufweisen (dieser Winkel entspricht also dem halben Öffnungswinkel eines rotationssymmetrischen Kegels). Weiterhin kann die konusförmige Aufweitung einen Winkel von 4 bis 15 Grad, vorzugsweise 6 bis 11 und besonders bevorzugt von 7 bis 9 Grad zur Konusachse aufweisen (dieser Winkel entspricht also dem halben Öffnungswinkel eines rotationssymmetrischen Kegels).

Strömungstechnisch günstig ist es, wenn die konusförmige Verjüngung eine größere axiale Länge aufweist als die konusförmige Aufweitung. Damit lässt sich insbesondere bei als Separator ausgebildeten Filterelementen der Sog beim Ausströmen durch die langsamere Querschnittsänderung harmonisch erzeugen.

Bei einer optionalen Ausgestaltung ist vorgesehen, dass die Querschnittsverengung im Bereich des kleinsten Innendurchmessers einen (zumindest im Wesentlichen) zylindrischen Kanalabschnitt aufweist. Damit wird eine Strömungsablösung von der Wandung des Zugangskanals verhindert, weil die Strömungsumlenkung von der Verjüngung zur Aufweitung langsamer erfolgt.

Es bietet sich eine Ausgestaltung an, bei der die konusförmige Aufweitung eine kleinere axiale Länge aufweist als der zylindrischen Kanalabschnitt. Die konusförmige Verjüngung sollte eine größere axiale Länge aufweisen als der zylindrischen Kanalabschnitt. Weiterhin sollte die Querschnittsverengung im Bereich des kleinsten Innendurchmessers eine Querschnittsfläche aufweisen, die kleiner ist als eine Querschnittsfläche des Hohlraums.

In einer besonderen Ausführungsform weist der Zugangskanal auf der zur Filterröhre weisenden Seite einen zylindrischen Endabschnitt auf, der insbesondere in die Filterröhre ragt. Damit wird ein Übergang mit laminarer Strömung zur Filterröhre geschaffen.

Vorzugsweise ist der Hohlraum zylindrisch ausgebildet. Außerdem ist die Filterröhre bevorzugt zylindrisch ausgebildet. Hierdurch ist die Strömungsgeschwindigkeit möglichst harmonisch ohne tote Strömungsbereiche und es gelingt eine platzsparende benachbarte Anordnung mehrerer solcher Filterelemente.

Die Strömungseffekte des Venturi-Rohrs kommen insbesondere zum Tragen, wenn der Hohlraum zwischen dem ersten und zweiten Ende eine Länge aufweist, die wenigstens viermal, vorzugsweise wenigstens siebenmal und besonders bevorzugt wenigstens zehnmal so groß ist wie eine Breite des Hohlraums in der Querrichtung hierzu.

Grundsätzlich ist es möglich, dass der Zugangskanal einteilig mit zumindest einer Schicht der Filterröhre ausgebildet ist, dann vorzugsweise mit einem Stützrohr der Filterröhre einteilig ausgebildet ist.

Bevorzugt ist allerdings eine Ausgestaltung, gemäß der der Zugangskanal in einem Endstück ausgebildet ist, das mit der Filterröhre verbunden ist. Damit lässt sich das Endstück bspw. aus Kunststoff herstellen. Ein etwaiges Stützrohr der Filterröhre kann dann hingegen aus einem abweichenden Material hergestellt werden, bspw. einem anderen Kunststoff, einem Faserverbundwerkstoff oder aus Metall.

Strömungstechnisch bietet sich ein Design an, bei dem der Zugangskanal im Endstück am zur Filterröhre weisenden Ende einen Durchmesser aufweist, der kleiner ist als ein Durchmesser am von der Filterröhre wegweisenden Ende.

Optional kann der Zugangskanal im Endstück am zur Filterröhre weisenden Ende einen Durchmesser aufweisen, der kleiner ist als ein Durchmesser des Hohlraums. Damit lässt sich die laminare Strömung von der Innenwandung der Filterröhre etwas fernhalten. Außerdem lässt sich das Endstück so konstruieren, dass es sich in die Filterröhre einschieben lässt. Eine stabile Verbindung ist hierdurch ausbildbar.

In einer besonderen Ausführungsform weist das Endstück auf der zur Filterröhre weisenden Seite eine Aufnahmenut auf, in die die Filterröhre axial eingeschoben ist. Hierdurch wird eine stabile Verbindung hergestellt. Dabei kann die Filterröhre in der Aufnahmenut befestigt sein, insbesondere fluiddicht, und vorzugsweise durch Einkleben, Vergießen, Einpressen oder Einschweißen.

Bevorzugt weist die Filterröhre einen Schichtaufbau mit einem Stützrohr und wenigstens einem Filtermaterial auf. Damit lässt sich das Stützrohr auf die Aufgabe des Stützens bzw. die Formstabilität konfigurieren und man ist frei in der Materialwahl für das eigentliche Filtermaterial, welches insbesondere nicht formstabil sein muss.

Bei dem Stützrohr handelt es sich vorzugsweise um ein Siebrohr.

Bei einer Ausgestaltung als Coalescer kann der Schichtaufbau koaleszierend ausgebildet sein. Dabei ist vorzugsweise wenigstens ein Filtermaterial des Schichtaufbaus hydrophob. Optional kann wenigstens ein Filtermaterial des Schichtaufbaus hydrophil sein.

In der bevorzugten Ausgestaltung als Separator kann wenigstens ein Filtermaterial des Schichtaufbaus ein Separatorgewebe sein, insbesondere die äußerste Schicht. Diese ist bspw. hydrophob ausbildbar, um Wasser aus Kraftstoff abzuscheiden. Optional kann wenigstens ein Filtermaterial des Schichtaufbaus ein Gittergelege sein. Bevorzugt umgibt das Separatorgewebe das Gittergelege, wobei das Separatorgewebe feinere Durchtrittsöffnungen aufweisen sollte als das Gittergelege. Das Gittergelege stützt bspw. das feinmaschigere Separatorgewebe gegenüber größeren Öffnungen im Stützrohr ab. Außerdem kann das Gittergelege Strömungskanäle zwischen den Öffnungen im Stützrohr ausbilden, sodass das Fluid seinen Weg zu den Öffnungen im Stützrohr findet, auch wenn es bspw. das Separatorgewebe in einem Zwischenbereich zwischen solchen Öffnungen durchdrungen hat.

Bei einer besonderen Ausführungsform ist im Bereich des Zugangs ein rohrförmiger Einsteckkupplungsabschnitt mit einem Außenumfang und einem freien Ende zum axialen Einsetzen in eine Montageöffnung ausgebildet, wobei der Einsteckkupplungsabschnitt vorzugsweise vom optionalen Endstück ausgebildet ist, wobei wenigstens zwei radiale Durchtrittsöffnungen im Einsteckkupplungsabschnitt ausgebildet sind, die in wenigstens zwei axial zueinander versetzten Ebenen angeordnet sind, und die jeweils eine radiale Umgebung um den Außenumfang mit dem Zugangskanal verbinden. Beim Einstecken des Einsteckkupplungsabschnitts in die Montageöffnung resultiert vor allem aufgrund von definierten Dichtflächen benachbart zu diesen ein Montagespalt. Durch das Druckgefälle im Zugangskanal, insbesondere wenn eine Querschnittsänderung zwischen den Ebenen liegt, wie bspw. bei einer Ausbildung des Zugangskanals als Venturi-Rohr, wird ein kontinuierlicher Spülstrom zwischen den beiden axial versetzten Durchtrittsöffnungen erzeugt, der den Montagespalt sauber hält. Zwischen den axial versetzten Durchtrittsöffnungen bildet sich eine Art Bypass aus. Der Querschnitt des Zugangskanals sollte in den versetzt angeordneten Ebenen vorzugsweise unterschiedlich groß sein.

Im Speziellen können wenigstens sechs radiale Durchtrittsöffnungen im Einsteckkupplungsabschnitt ausgebildet sein, die in wenigstens zwei axial zueinander versetzten Ebenen angeordnet sind, und die jeweils eine radiale Umgebung um den Außenumfang mit dem Zugangskanal verbinden. Damit lässt sich der Spülstrom im ringförmigen Montagespalt dort positionieren, wo er gewünscht ist.

Bevorzugt sind die radialen Durchtrittsöffnungen über einen Umfang des Einsteckkupplungsabschnitt verteilt angeordnet, vorzugsweise gleichverteilt. Damit lässt sich mit dem Spülstrom der gesamte ringförmige Montagespalt gleichmäßig spülen.

Weiterhin können in dem Außenumfang des Einsteckkupplungsabschnitts (exakt) eine, (exakt) zwei oder wenigstens zwei Dichtungsnuten für jeweils einen Dichtring ausgebildet sein, wobei die Durchtrittsöffnungen zwischen dem freien Ende des Einsteckkupplungsabschnitts und derjenigen der Dichtungsnuten, die am weitesten vom freien Ende entfernt angeordneten ist, angeordnet sein. Damit kann der Spülstrom kein Fluid erfassen, dass auf der Außenseite der Filterröhre bzw. des Filterelements vorliegt. Die optional mehreren Dichtringe dienen meist dazu, eine stabile Lagerung von länglichen Filterelementen zu erzielen und so Dichtungsverformungen und Undichtigkeiten durch bspw. Biegemomente zu verhindern. Soweit der am weitesten vom freien Ende entfernt angeordnete Dichtring hinreichend abdichtet, kann also der Montagespalt von dieser Dichtebene bis zum freien Ende gespült werden und bleibt hierdurch frei von Mikroben und Ablagerungen.

Gemäß einer näheren Ausgestaltung können wenigstens zwei Dichtungsnuten vorgesehen sein und die Durchtrittsöffnung sind zwischen den zwei Dichtungsnuten angeordnet. Die Durchtrittsöffnungen ermöglichen, selbst den Dichtungszwischenraum zwischen zwei Dichtungen kontinuierlich zu spülen.

Strömungstechnisch günstig ist es, wenn eine Querschnittsfläche der jeweiligen Durchtrittsöffnung kleiner ist als ein Prozent der kleinsten Querschnittsfläche des

Zugangskanals, im Besonderen des Venturi-Rohrs. Damit verläuft die Hauptströmung weiter durch den Zugangskanal und nur ein kleiner Spülstrom wird im Montagespalt erzeugt.

Außerdem werden Wirbel an den Übergängen zwischen Zugangskanal und Durchtrittsöffnungen reduziert.

Vorzugsweise sind die Durchgangslöcher in der konusförmigen Verjüngung angeordnet. Sie sind somit weg von der Filterröhre sowie in einem Bereich mit großer Druckdifferenz platziert.

Die konusförmige Verjüngung der Querschnittsverengung führt vorzugsweise bis an das freie Ende des Einsteckkupplungsabschnitts. Damit wird ein Querschnittssprung zur Montageöffnung reduziert und die minimale Wandstärke des Einsteckkupplungsabschnitts lässt sich auf das freie Ende beschränken.

Der Einsteckkupplungsabschnitt kann eine zylindrische Außenwandung aufweisen, die zumindest einen Teil des Außenumfangs des Einsteckkupplungsabschnitts ausbildet. Es resultiert eine schlanke, rohrförmige Bauform auch im Bereich des Einsteckkupplungsabschnitts.

Des Weiteren kann der Einsteckkupplungsabschnitt einen Einsteckanschlag aufweisen, vorzugsweise mit der Form einer umlaufenden Rippe. Damit lässt sich die Montagetiefe in der Montageöffnung definieren und kontrollieren.

Es erweist sich als vorteilhaft, wenn der Einsteckkupplungsabschnitt auf der von der Filterröhre wegweisenden Seite eine Einführschräge aufweist. Damit lässt er sich einfach in eine Montageöffnung einsetzen.

Das zweite Ende der Filterröhre sollte verschlossen sein, vorzugsweise mit einem Verschlussstück (auch als Endscheibe bezeichenbar). Es ist aber bspw. auch ein einteilig mit einem Stützrohr ausgebildetes verschlossenes Ende umsetzbar.

Die Erfindung betrifft außerdem ein Filtermodul mit einem Filtergehäuse, das einen Gehäusehohlraum mit einem Filterzulauf und einen Filterablauf ausbildet, und mit wenigstens einem Filterelement wie es vor und nachstehend angegeben ist in dem Gehäusehohlraum, wobei der Filterzulauf oder der Filterablauf in die Zugangsöffnung des Filterelements mündet und hierdurch über das Filterelement, insbesondere auch dessen Filterröhre, mit dem Gehäusehohlraum strömungsverbunden ist. Durch die bevorzugte Ausgestaltung des Filterelements mit Zugangskanal als Venturi-Rohr wird die Durchströmung des Filtermoduls und die Reinigungseffektivität des zu reinigenden Fluids verbessert. Mit den optionalen Einsteckkupplungsabschnitt und Durchgangsöffnungen, lässt sich ein Spülstrom zur Vermeidung von Mikrobenbildung erzeugen.

Optional weist der Gehäusehohlraum einen Fluidsumpf für ein abgeschiedenes Fluid auf. Damit kann abgeschiedenes Fremdfluid abgeschieden werden.

Vorzugsweise ist das Filterelement als Separator-Element ausgestaltet und deren Zugangsöffnung mündet in den Filterablauf. Optional kann eine weitere Filtervorrichtung als Coalescer-Element ausgebildet sein, deren Zugangsöffnung in den Filterzulauf mündet.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Längsschnitt durch ein Filterelement mit einer Vergrößerungsansicht;
- Fig. 2: einen vergrößerten Ausschnitt des Filterelements im Bereich eines Endstücks nach Fig. 1;
- Fig. 3: eine Detailansicht eines Endstücks eines Filterelements in einer Montageöffnung als Längsschnitt; und
- Fig. 4: eine perspektivische Ansicht eines Filtermoduls mit teilweise transparent dargestellten Bauteilen.

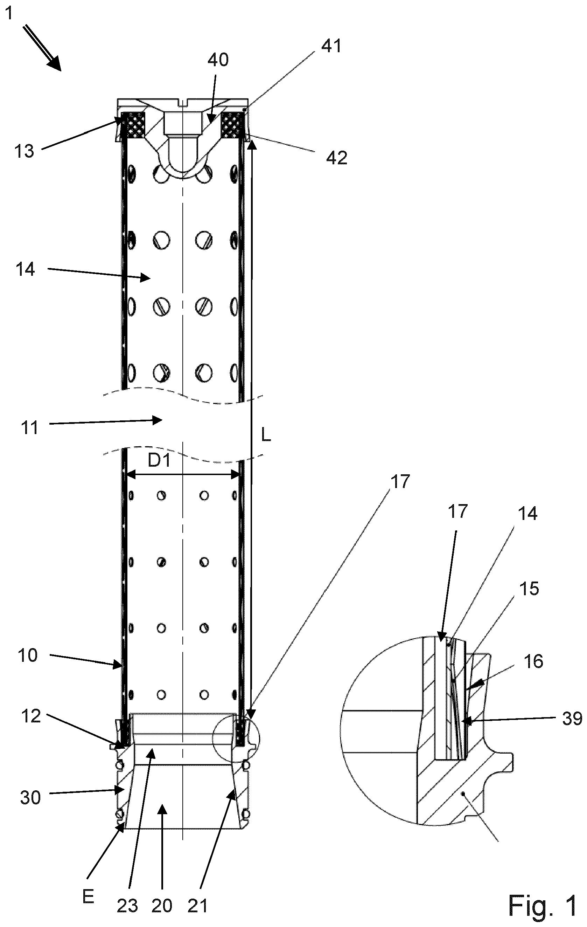

**Fig. 1** zeigt ein Filterelement 1, das eine rohrförmige Filterröhre 10 aufweist. Die Filterröhre 10 bildet einen zylindrischen Hohlraum 11 aus und hat ein erstes und ein zweites Ende 12, 13. Der von der Filterröhre 10 ausgebildete Hohlraum 11 zwischen dem ersten und zweiten Ende 12, 13 hat eine Länge L, die wenigstens viermal so groß ist wie eine Breite bzw. ein Durchmesser D1 des Hohlraums 11 in der Querrichtung hierzu.

Die Filterröhre 10 weist gemäß dem Vergrößerungsausschnitt der Fig. 1 einen Schichtaufbau mit einem Stützrohr 14, insbesondere einem Siebrohr, und wenigstens einem Filtermaterial 15, 16 auf. Bei dem Filtermaterial 15 kann es sich beispielsweise um ein Gittergelege handeln, dass von dem Filtermaterial 16 umgeben ist. Das Filtermaterial 16 kann ein Separatorgewebe sein. Dann handelt es sich bei dem Filterelement 1 um einen Separator, bspw. zur Abtrennung von Wasser aus Kraftstoff. Alternativ kommt jedoch auch ein koaleszierender Schichtaufbau in Betracht. Dann kann beispielsweise wenigstens ein Filtermaterial 15 des Schichtaufbaus hydrophob und ein Filtermaterial 16 des Schichtaufbaus hydrophil ausgebildet sein.

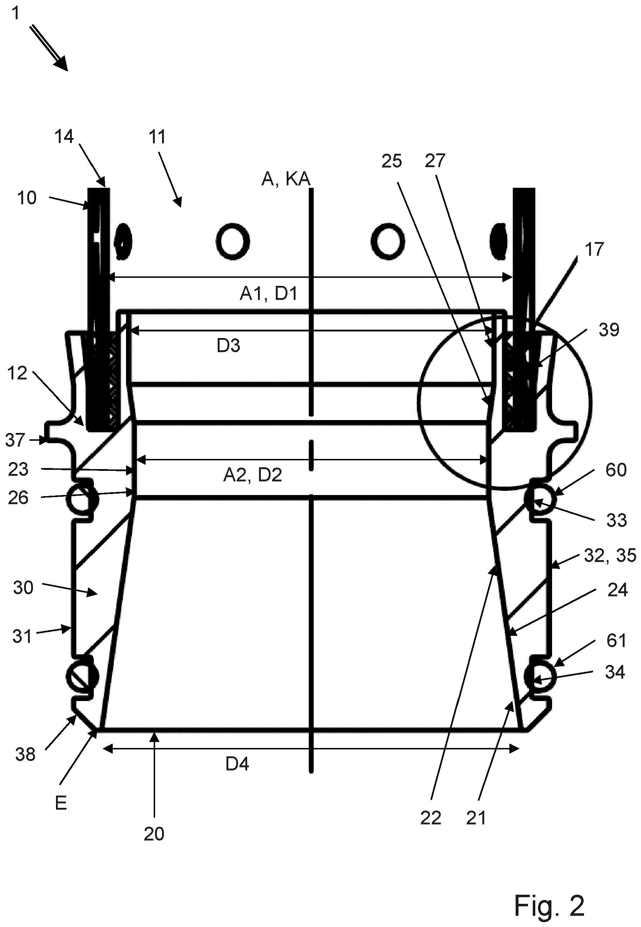

Am ersten Ende 12 der Filterröhre 10 ist ein Zugang 20 in den Hohlraum 11 mit einem Zugangskanal 21 ausgebildet. Dieser Zugangskanal 21 ist als Venturi-Rohr 22 mit einer Querschnittsverengung 23 ausgebildet ist. Dieser Bereich des Venturi-Rohrs 22 wird später näher zu Fig. 2 beschrieben. Vorliegend ist der Zugangskanal 21 in einem Endstück 30 ausgebildet, das mit der Filterröhre 10 verbunden ist. Das zweite Ende 13 der Filterröhre 10 ist verschlossen, nämlich mit einem Verschlussstück 40.

Wie im Vergrößerungsausschnitt der Fig. 1 zu erkennen ist, weist das Endstück 30 auf der zur Filterröhre 10 weisenden Seite eine stirnseitige Aufnahmenut 39 auf, in die die Filterröhre 10 axial eingeschoben ist, vorliegend mit dem Stützrohr 14 und dem Filtermaterial 15, 16. Dort ist die Filterröhre 10 durch eine Vergussmasse 17 fluiddicht befestigt.

Auch das Verschlussstück 40 weist auf der zur Filterröhre 10 weisenden Seite eine stirnseitige Aufnahmenut 41 auf, in die die Filterröhre 10 axial eingeschoben ist, vorliegend mit dem Stützrohr 14 und dem Filtermaterial 15, 16. Dort ist die Filterröhre 10 durch eine Vergussmasse 42 fluiddicht befestigt.

**Fig. 2** zeigt einen vergrößerten Ausschnitt des Filterelements 1 nach Fig. 1 im Bereich des Endstücks 30. Gleiche Bezugsziffern betreffen daher gleiche technische Merkmale. Daher wird auf die Beschreibung zu Fig.1 verwiesen und nur die weiteren technischen Details des Endstücks 30 werden erläutert.

Der Zugangskanal 21 im Endstück 30 ist als Venturi-Rohr 22 mit einer Querschnittsverengung 23 ausgebildet. Dazu weist die Querschnittsverengung 23 eine konusförmige Verjüngung 24 in Richtung des Hohlraums 11 und eine konusförmige Aufweitung 25 in Richtung des Hohlraums 11 auf, nämlich auf der zum Hohlraum 11 weisenden Seite der konusförmige Verjüngung 24.

Die konusförmige Verjüngung 24 weist einen Winkel zwischen 4 und 15 Grad, nämlich insbesondere einen Winkel von 8 Grad, zu einer Konusachse KA auf, die koaxial zur Achse A des Filterelements 1, insbesondere auch der Filterröhre 10 und des Endstücks 30, ausgerichtet ist. Auch die konusförmige Aufweitung 25 hat einen Winkel zwischen 4 und 15 Grad zur Konusachse KA, nämlich insbesondere von 8 Grad. Erkennbar ist die konusförmige Verjüngung 24 in Richtung der Konusachse KA länger als die konusförmige Aufweitung 25. Die konusförmige Verjüngung 24 reicht bis an das freie Ende E des Endstücks 30.

Die Querschnittsverengung 23 weist im Bereich des kleinsten inneren Durchmessers D2 einen zylindrischen Kanalabschnitt 26 auf. Dieser liegt zwischen der konusförmige Verjüngung 24 und der konusförmige Aufweitung 25. Die konusförmige Aufweitung 25 ist in Richtung der Konusachse KA kürzer als der zylindrische Kanalabschnitt 26. Dahingegen ist die konusförmige Verjüngung 24 in Richtung der Konusachse KA länger als der zylindrische Kanalabschnitt 26.

Weiterhin weist der Zugangskanal 21 auf der zur Filterröhre 10 weisenden Seite einen zylindrischen Endabschnitt 27 auf, der in die Filterröhre 10 ragt. Daraus resultiert, dass die Querschnittsverengung 23 im Bereich des kleinsten inneren Durchmessers D2 eine Querschnittsfläche A2 aufweist, die kleiner ist als eine Querschnittsfläche A1 des Hohlraums 11. Außerdem weist der Zugangskanal 21 im Endstück 30 am zur Filterröhre 10 weisenden Ende einen Durchmesser D3 auf, der kleiner ist als der Durchmesser D1 des Hohlraums 11.

Der Zugangskanal 21 im Endstück 30 hat am zur Filterröhre 10 weisenden Ende einen Durchmesser D3, der kleiner ist als ein Durchmesser D4 am von der Filterröhre 10 wegweisenden freien Ende E. Dieser Durchmesser D4 des Zugangskanals 21 am freien Ende E ist sogar größer als der Innendurchmesser D1 des Hohlraums 11.

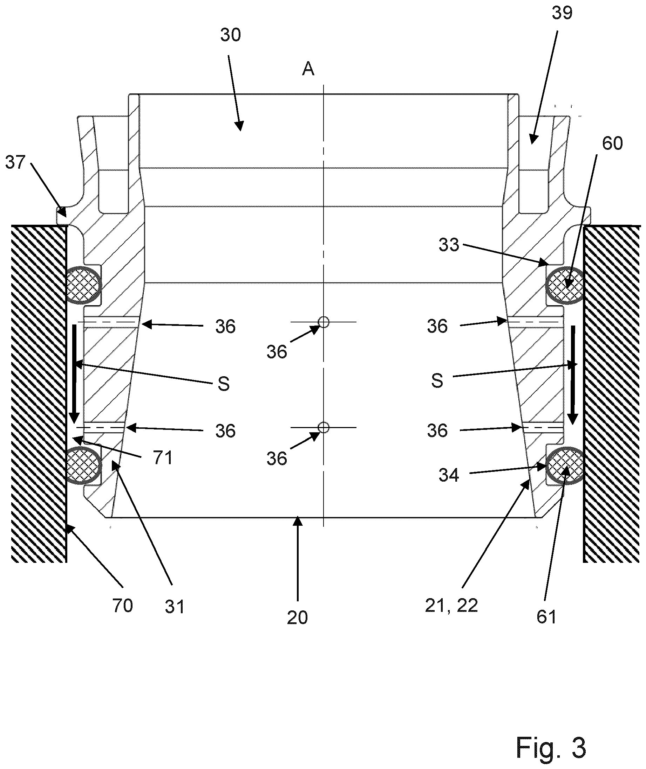

Im Bereich des Zugangs 20 ist ein rohrförmiger Einsteckkupplungsabschnitt 31 vom Endstück 30 ausgebildet, der einen Außenumfang 32 und das freie Ende E ausbildet, und zum axialen Einsetzen in eine Montageöffnung 70 (siehe dazu Fig. 3) ausgebildet ist. In dem Außenumfang 32 des Einsteckkupplungsabschnitts 31 sind zwei Dichtungsnuten 33, 34 ausgebildet, in denen jeweils ein Dichtring 60, 61 sitzt.

Der Einsteckkupplungsabschnitt 31 weist insbesondere vor, zwischen und hinter den Dichtungsnuten 33, 34 eine zylindrische Außenwandung 35 auf. Am freien Ende E weist der Einsteckkupplungsabschnitt 31 eine Einführschräge 38 auf. Das andere Ende des Einsteckkupplungsabschnitt 31 verfügt über einen Einsteckanschlag 37 in Form einer umlaufenden Rippe.

**Fig. 3** zeigt eine Detailansicht eines Endstücks 30 eines Filterelements 1 in einer Montageöffnung 70. Dieses Endstück 30 entspricht zumindest im Wesentlichen demjenigen der Fig. 2. Gleiche Bauteile haben daher die gleiche Bezugsziffer und es wird zunächst auf die Beschreibung zu Fig. 2 verwiesen. In Fig. 2 ist anders als in Fig. 3 allerdings nicht zu sehen oder nicht enthalten, dass wenigstens zwei radiale Durchtrittsöffnungen 36 im Einsteckkupplungsabschnitt 31 ausgebildet sind. Diese sind gemäß Fig. 3 in zwei axial zueinander versetzten Ebenen angeordnet, die zwischen den Dichtungsnuten 33, 34 liegen, und die jeweils eine radiale Umgebung um den Außenumfang 32 mit dem Zugangskanal 21 verbinden. Das Endstück 30 sitzt in der Montageöffnung 70 derart, dass zwischen den zwei Dichtringen 60, 61, dem Außenumfang 32 und der Montageöffnung 70 ein Montagespalt 71 verbleibt.

Durch das Druckgefälle im als Venturi-Rohr 22 ausgebildeten Zugangskanal 21 und durch den Versatz in Richtung der Achse A wird ein kontinuierlicher Spülstrom S zwischen den beiden axial versetzten Durchtrittsöffnungen 36 erzeugt, der den Montagespalt 71 sauber hält. Man erkennt, dass vorliegend wenigstens sechs solche radiale Durchtrittsöffnungen 36 im Einsteckkupplungsabschnitt 31 ausgebildet sind, die in den zwei axial zueinander versetzten Ebenen angeordnet sind, und die jeweils paarweise eine radiale Umgebung um den Außenumfang 32 mit dem Zugangskanal 21 verbinden. Die radialen Durchtrittsöffnungen 36 sind über einen Umfang des Einsteckkupplungsabschnitt 31 gleichverteilt angeordnet.

Man erkennt, dass eine Querschnittsfläche der jeweiligen Durchtrittsöffnung 36 wesentlich kleiner ist als die kleinste Querschnittsfläche A2 der Querschnittsverengung 23 des Venturi-Rohrs 22. Bevorzugt haben die Durchtrittsöffnungen 36 eine Querschnittsfläche von maximal einem Prozent der kleinsten Querschnittsfläche A2 der Querschnittsverengung 23.

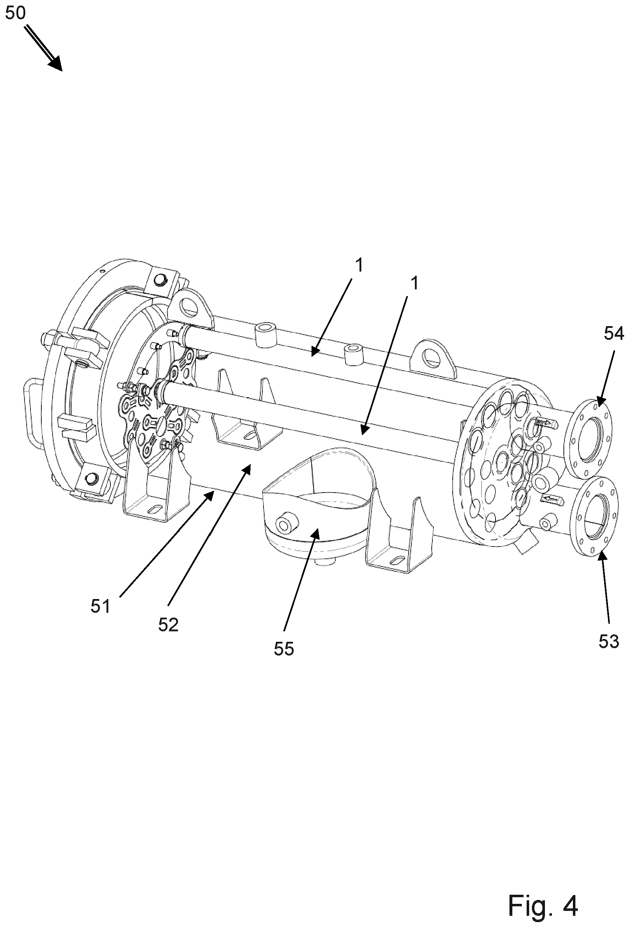

In **Fig. 4** sieht man ein Filtermodul 50 mit einem Filtergehäuse 51, das einen Gehäusehohlraum 52 mit einem Filterzulauf 53 und einen Filterablauf 54 ausbildet. Auf der dem Filterzulauf 53 und Filterablauf 54 gegenüberliegenden Seite ist ein Servicedeckel vorgesehen. Im unteren Bereich des Gehäusehohlraums 52 ist einen Fluidsumpf 55 für ein abgeschiedenes Fluid ausgebildet.

In dem Gehäusehohlraum 52 sind exemplarisch zwei Filterelemente 1 angeordnet, die denjenigen der Fig. 1 bis 3 entsprechen können. Der Filterzulauf 53 mündet über einen Verteiler, der noch mehr solcher Filterelemente 1 aufnehmen kann, in die Zugangsöffnung (20) des weiter unten angeordneten Filterelements 1, welches hierdurch von Innen nach Außen durchströmt wird. Um beispielsweise ein Fluid abzuscheiden, wäre die Filterröhre (10) dieses Filterelements 1 koaleszierend auszubilden.

Der Filterablauf 54 mündet über einen anderen Verteiler, der ebenfalls eine Mehrzahl an Filterelementen 1 speisen kann, in die Zugangsöffnung 20 des weiter oben angeordneten Filterelements 1. Dessen Filterröhre (10) wird hierdurch vom Fluid aus dem Gehäusehohlraum 52 von außen nach innen hin zum Filterablauf 54 durchströmt. Um beispielsweise ein Fluid abzuscheiden, wäre die Filterröhre (10) dieses Filterelements 1 als Separator auszubilden.

Würde jetzt beispielsweise ein mit Wasser verunreinigter Kraftstoff durch das Filtermodul 50 geleitet, koalesziert das Wasser in dem unteren Filterelement 1 und tropft ab. Die koaleszierten Wassertropfen sinken in den Fluidsumpf 55. Fein gelöste Restmengen an Wasser im Kraftstoff werden dann an dem als Separator ausgebildeten oberen Filterelement 1 zurückgehalten und tropfen von diesem ab. Die separierten Wassertropfen sinken dann an dem unteren Filterelement 1 vorbei ebenfalls zum Fluidsumpf 55.

Die Erfindung ist nicht auf eine der vorbeschriebenen Ausführungsformen beschränkt, sondern in vielfältiger Weise abwandelbar.

So könnte der Zugangskanal 21 bzw. das Endstück 30 auch einteilig mit zumindest einer Schicht der Filterröhre 10 ausgebildet sein, dann vorzugsweise mit dem optionalen Stützrohr 14.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Filterelement | 40 | Verschlussstück |
| | | 41 | Aufnahmenut |
| 10 | Filterröhre | 42 | Vergussmasse |
| 11 | Hohlraum | | |
| 12 | erstes Ende | 50 | Filtermodul |
| 13 | zweites Ende | 51 | Filtergehäuse |
| 14 | Stützrohr | 52 | Gehäusehohlraum |
| 15 | Filtermaterial | 53 | Filterzulauf |
| 16 | Filtermaterial | 54 | Filterablauf |
| 17 | Vergussmasse | 55 | Fluidsumpf |
| 20 | Zugangsöffnung | 60 | Dichtring |
| 21 | Zugangskanal | 61 | Dichtring |
| 22 | Venturi-Rohr | | |
| 23 | Querschnittsverengung | 70 | Montageöffnung |
| 24 | konusförmige Verjüngung | 71 | Montagespalt |
| 25 | konusförmige Aufweitung | | |
| 26 | zylindrischer Kanalabschnitt | A | Achse |
| 27 | zylindrischer Endabschnitt | A1 | Querschnittsfläche (Hohlraum) |
| | | A2 | Querschnittsfläche (Querschnittsverengung) |
| 30 | Endstück | | |
| 31 | Einsteckkupplungsabschnitt | D1 | Durchmesser (Hohlraum) |
| 32 | Außenumfang | D2 | Durchmesser (Querschnittsverengung) |
| 33 | Dichtungsnut | | |
| 34 | Dichtungsnut | D3 | Durchmesser |
| 35 | zylindrische Außenwandung | D4 | Durchmesser (freies Ende) |
| | | E | freies Ende |
| 36 | radiale Durchtrittsöffnung | KA | Konusachse |
| 37 | Einsteckanschlag | L | Länge (Hohlraum) |
| 38 | Einführschräge | S | Spülstrom |
| 39 | Aufnahmenut | | |

## Patentansprüche

1. **Filterelement** (1) mit einer Filterröhre (10), die einen Hohlraum (11) und ein erstes und ein zweites Ende (12, 13) aufweist, wobei am ersten Ende (12) der Filterröhre (10) ein Zugang (20) in den Hohlraum (11) mit einem Zugangskanal (21) ausgebildet ist, **dadurch gekennzeichnet, dass** der Zugangskanal (21) als Venturi-Rohr (22) mit einer Querschnittsverengung (23) ausgebildet ist.

2. Filterelement (1) gemäß Anspruch 1, **dadurch gekennzeichnet, dass**
- die Querschnittsverengung (23) eine konusförmige Verjüngung (24) in Richtung des Hohlraums (11) aufweist; und/oder
- die Querschnittsverengung (23) eine konusförmige Aufweitung (25) in Richtung des Hohlraums (11) aufweist.

3. Filterelement (1) gemäß einem der Ansprüche 1 oder 2, **dadurch gekennzeichnet, dass** der Zugangskanal (21) auf der zur Filterröhre (10) weisenden Seite einen zylindrischen Endabschnitt (27) aufweist.

4. Filterelement (1) gemäß einem der vorhergehenden Ansprüche, **dadurch gekennzeichnet, dass** der Hohlraum (11) zwischen dem ersten und zweiten Ende (12, 13) eine Länge (L) aufweist, die wenigstens viermal so groß ist wie eine Breite des Hohlraums (11) in der Querrichtung hierzu.

5. Filterelement (1) gemäß einem der vorhergehenden Ansprüche, **dadurch gekennzeichnet, dass** der Zugangskanal (21) in einem Endstück (30) ausgebildet ist, das mit der Filterröhre (10) verbunden ist.

6. Filterelement (1) gemäß Anspruch 5, **dadurch gekennzeichnet, dass** der Zugangskanal (21) im Endstück (30) am zur Filterröhre (10) weisenden Ende einen Durchmesser (D3) aufweist, der kleiner ist als ein Durchmesser (D4) am von der Filterröhre (10) wegweisenden Ende.

7. Filterelement (1) gemäß einem der Ansprüche 5 oder 6, **dadurch gekennzeichnet, dass** das Endstück (30) auf der zur Filterröhre (10) weisenden Seite eine Aufnahmenut (39) aufweist, in die die Filterröhre (10) axial eingeschoben ist.

8. Filterelement (1) gemäß einem der vorhergehenden Ansprüche, **dadurch gekennzeichnet, dass** die Filterröhre (10) einen Schichtaufbau mit einem Stützrohr (14) und wenigstens einem Filtermaterial (15, 16) aufweist.

9. Filterelement (1) gemäß einem der vorhergehenden Ansprüche, **dadurch gekennzeichnet, dass** im Bereich des Zugangs (20) ein rohrförmiger Einsteckkupplungsabschnitt (31) mit einem Außenumfang (32) und einem freien Ende (E) zum axialen Einsetzen in eine Montageöffnung (70) ausgebildet ist, wobei wenigstens zwei radiale Durchtrittsöffnungen (36) im Einsteckkupplungsabschnitt (31) ausgebildet sind, die in wenigstens zwei axial zueinander versetzten Ebenen angeordnet sind, und die jeweils eine radiale Umgebung um den Außenumfang (32) mit dem Zugangskanal (21) verbinden.

10. Filterelement (1) gemäß Anspruch 9, **dadurch gekennzeichnet, dass** wenigstens sechs radiale Durchtrittsöffnungen (36) im Einsteckkupplungsabschnitt (31) ausgebildet sind, die in wenigstens zwei axial zueinander versetzten Ebenen angeordnet sind, und die jeweils eine radiale Umgebung um den Außenumfang (32) mit dem Zugangskanal (21) verbinden.

11. Filterelement (1) gemäß einem der Ansprüche 9 oder 10, **dadurch gekennzeichnet, dass** die radialen Durchtrittsöffnungen (36) über einen Umfang des Einsteckkupplungsabschnitt (31) verteilt angeordnet sind.

12. Filterelement (1) gemäß einem der Ansprüche 9 bis 11, **dadurch gekennzeichnet, dass** in dem Außenumfang (32) des Einsteckkupplungsabschnitts (31) eine, zwei oder wenigstens zwei Dichtungsnuten (33, 34) für jeweils einen Dichtring (60, 61) ausgebildet sind, wobei die Durchtrittsöffnungen (36) zwischen dem freien Ende (E) des Einsteckkupplungsabschnitts (31) und derjenigen der Dichtungsnuten (36), die am weitesten vom freien Ende (E) entfernt angeordneten ist, angeordnet sind.

13. Filterelement (1) gemäß einem der Ansprüche 9 bis 12, **dadurch gekennzeichnet, dass** wenigstens zwei Dichtungsnuten (33, 34) vorgesehen sind und die Durchtrittsöffnung (36) zwischen den zwei Dichtungsnuten (33, 34) angeordnet sind.

14. Filterelement (1) gemäß einem der Ansprüche 9 bis 13, **dadurch gekennzeichnet, dass** eine Querschnittsfläche der jeweiligen Durchtrittsöffnung (36) kleiner ist als ein Prozent der kleinsten Querschnittsfläche (A2) des Zugangskanals (21) (22).

15. **Filtermodul** (50) mit einem Filtergehäuse (51), das einen Gehäusehohlraum (52) mit einem Filterzulauf (53) und einen Filterablauf (54) ausbildet, und mit wenigstens einem Filterelement (1) gemäß einem der vorhergehenden Ansprüche in dem Gehäusehohlraum (52), wobei der Filterzulauf (53) oder der Filterablauf (54) in die Zugangsöffnung (20) des Filterelements (1) mündet und hierdurch über das Filterelement (1) mit dem Gehäusehohlraum (52) strömungsverbunden ist.
